# EUROPEAN PATENT APPLICATION

(11) **EP 3 434 157 A1**
(43) Date of publication of application: **30.01.2019**
(21) Application number: 17183026.8
(22) Date of filing: 25.07.2017
(51) Int. Cl.: A47J 27/21

(54) **APPARATUS FOR HEATING A LIQUID**

(71) Applicant: Vestel Elektronik Sanayi ve Ticaret A.S., 45030 Manisa (TR)
(72) Inventor: ULUAG, Onur, 45030 Manisa (TR); BAKANOGLU, Kagan, 45030 Manisa (TR)
(74) Representative: Flint, Adam

(57) **Abstract**

Apparatus (1) for heating a liquid (2) includes an elastic heating element (9) having a first end (10) and a second end (11), and a buoyant element (12). The first end (10) of the elastic heating element (9) is attached to an inside surface of the apparatus (1). The second end (11) of the elastic heating element (9) is attached to the buoyant element (12). In use, the elastic heating element (9) can extend and retract according to the level of liquid within the apparatus (1).

## Description

### Technical Field

The present disclosure relates to an apparatus for heating a liquid such as water.

### Background

Apparatus, such as a heater, a boiler, a kettle or the like, that is used to heat a liquid such as water typically includes a reservoir and a heating element. The heating element is usually a resistive heating element which converts electricity into heat. The heating element is mounted to a bottom surface of the reservoir so that it protrudes into the reservoir whilst being in a position where it can connect to a power source. Usually, the power source is provided in the form of mains electricity. In use, a user fills the reservoir between a minimum and a maximum level with a liquid that is to be heated. The user then activates the power source which supplies electricity to the heating element. The heating element converts the electricity supplied by the power source into heat. The heat from the heating element, which is submerged in the liquid, is conducted into the liquid in the reservoir. Consequently, the temperature of the liquid increases. A thermostat such as a bimetallic strip thermostat is often used to automatically deactivate the power source when a particular temperature is reached.

### Summary

According to an aspect disclosed herein, there is provided apparatus for heating a liquid, the apparatus comprising: an elastic heating element having a first end and a second end; and a buoyant element, wherein the first end of the elastic heating element is attached to an inside surface of the apparatus, and the second end of the elastic heating element is attached to the buoyant element, whereby in use the elastic heating element can extend and retract according to the level of liquid within the apparatus.

This allows for the buoyancy force acting on the buoyant element to increase or decrease the length of the elastic heating element in order for the length of the elastic heating element to adapt to the height of the liquid level in the apparatus. An advantage of this is that since the length of the elastic heating element always corresponds (at least generally) to the height of the liquid level in the reservoir, the large volume of liquid that is present above the heating element in known apparatus is eliminated. The heat emitted by the elastic heating element therefore does not have to conduct a long distance through the liquid in the apparatus in order to heat the whole volume of the liquid. This results in quicker heat transfer through the liquid and therefore faster and more efficient heating of the liquid.

In an example, the elastic heating element has a helical shape.

In an example, the elastic heating element has a concertina shape.

In an example, the elastic heating element is formed from a Nichrome alloy. In an example, the Nichrome alloy comprises about 80 percent by mass nickel and about 20 percent by mass chromium. In another example, the Nichrome alloy comprises about 60 percent by mass nickel, about 15 percent by mass chromium and about 25 percent by mass of other components. In an example, the elastic heating element may be formed from an iron-chromium-aluminium alloy such as a Kanthal (RTM) alloy.

In an example, the elastic heating element is attached to the apparatus such that it is vertically oriented when the apparatus is in normal use and contains liquid.

In an example, the buoyant element is formed from a plastic, steel or aluminium.

In an example, the apparatus is a kettle.

In an example, the buoyant element has an average density of less than 950 kg/m³.

### Brief Description of the Drawings

To assist understanding of the present disclosure and to show how embodiments may be put into effect, reference is made by way of example to the accompanying drawings in which:
Figure 1 shows schematically a cross section of an example of an apparatus for heating a liquid, when the liquid in the reservoir is at a low level; and
Figure 2 shows schematically a cross section of an example of an apparatus for heating a liquid, when the liquid in the reservoir is at a high level.

### Detailed Description

Apparatus, such as a heater, a boiler, a kettle or the like, that is used to heat a liquid such as water typically includes a reservoir and a heating element. The heating element is usually a resistive heating element which converts electricity into heat. The heating element is mounted to a bottom surface of the reservoir so that it protrudes into the reservoir whilst being in a position where it can connect to a power source. Usually, the power source is provided in the form of mains electricity. In use, a user fills the reservoir between a minimum and a maximum level with a liquid that is to be heated. The user then activates the power source which supplies electricity to the heating element. The heating element converts the electricity supplied by the power source into heat. The heat from the heating element, which is submerged in the liquid, is conducted into the liquid in the reservoir. Consequently, the temperature of the liquid increases. A thermostat such as a bimetallic strip thermostat is often used to automatically deactivate the power source when a particular temperature is reached.

The heating element in known apparatus as described above has a fixed height and shape and is fixed in place within the heating apparatus. Since it is mounted to a bottom surface of the reservoir, when the reservoir is filled with liquid to a relatively high level, there is a large volume of liquid positioned above the heating element. This means that the heat emitted by the heating element must be conducted a relatively long distance through the liquid in order to heat the whole of the volume of liquid within the reservoir. Natural convection of the liquid that is heated assists heating the volume of liquid positioned above the heating element, but only to a certain extent. The heat transfer rate in known apparatus is therefore limited, which reduces efficiency and therefore wastes power and also increases the overall time taken to heat the liquid within the reservoir.

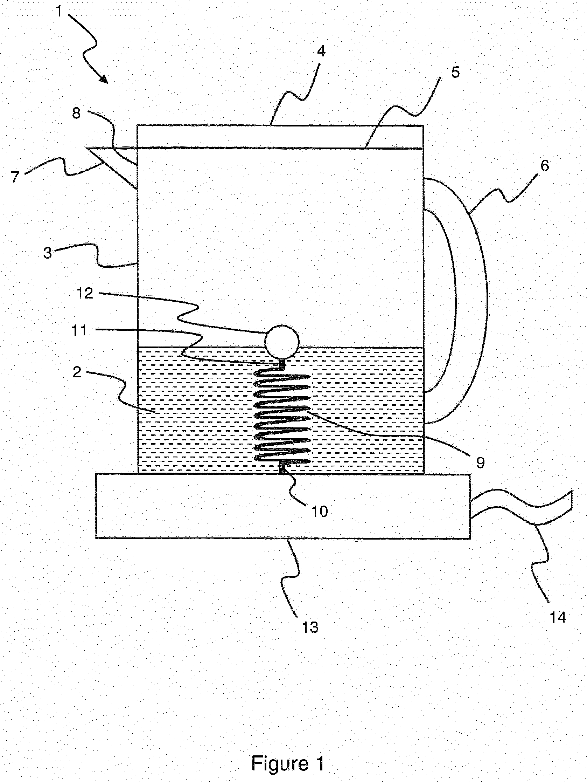

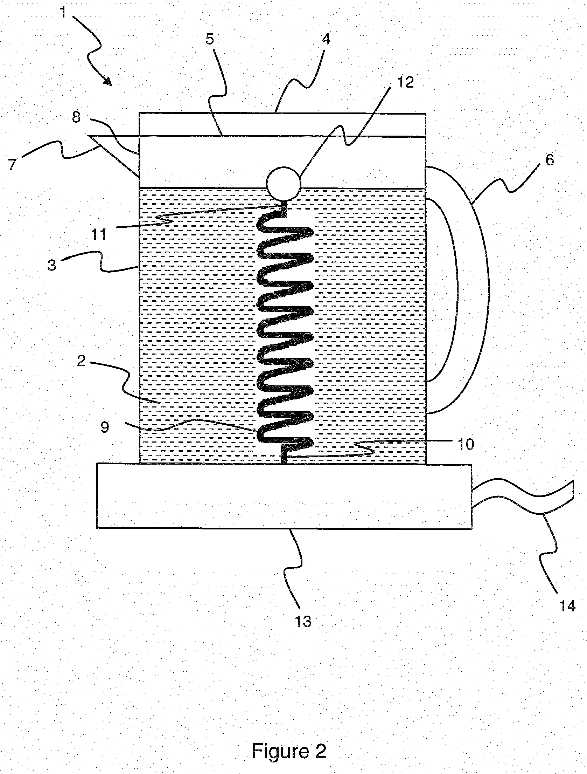

Referring now to Figures 1 and 2, there is shown schematically an example of an apparatus 1 for heating a liquid 2 according to the present disclosure. In this example, the apparatus 1 is a domestic kettle and the liquid 2 is water. In other examples, the apparatus 1 may be another apparatus that is suitable for heating a liquid, such as a heater, a boiler, a coffee machine, a vehicle's windshield water heater or the like. In other examples, the liquid may be another liquid that requires heating.

The apparatus 1 includes a reservoir 3 for receiving and holding the liquid 2. The reservoir 3 in this example is cylindrical. In other examples, the reservoir 3 may be another shape so long as the shape is suitable for holding a quantity of a liquid.

The apparatus 1 includes a lid 4 covering a filling opening 5 which allows a user to add a quantity of a liquid 2 into the reservoir 3. The apparatus I also includes a handle 6 and a spout 7. A pouring opening 8 is provided to allow a user to pour liquid 2 out of the reservoir 3.

The apparatus 1 also includes an elastic heating element 9 which is able to return to its normal "rest" shape spontaneously after being stretched in a longitudinal direction. The elastic heating element 9 can therefore be stretched under a load and can then can resume its normal shape when the load is removed. The elastic heating element 9 may be formed from a resilient material. In this example, the elastic heating element 9 is formed from a Nichrome alloy comprising about 80 percent by mass nickel and about 20 percent by mass chromium. In another example, the Nichrome alloy may comprise about 60 percent by mass nickel, about 15 percent by mass chromium and about 25 percent by mass of other components. In other examples, the elastic heating element 9 may be formed from another resilient material that is able to resume its normal shape spontaneously after being stretched or compressed, such as an iron-chromium-aluminium alloy such as a Kanthal (RTM) alloy. The elastic heating element 9 may also be arranged so as to be sufficiently rigid in a transverse direction so that, in use, the elastic heating element 9 does not bend over so far as to come into contact with the side or sides of the reservoir 3, particularly when a user pours liquid 2 out of the reservoir 3 through the pouring opening 8. The elastic heating element 9 converts electricity into heat through the process of resistive heating. In this example, the elastic heating element 9 is shaped to enhance its elasticity. Specifically, in this example, the elastic heating element 9 has a helical shape. In other examples, the elastic heating element 9 may be formed in another shape that enhances its elasticity such as a concertina shape.

The elastic heating element 9 is located within the reservoir 3 so as to be able to heat the liquid 2 within the reservoir 3. The elastic heating element 9 is mounted to the apparatus 1 so that it is substantially vertically oriented when the apparatus 1 is in normal use when the reservoir 3 contains liquid. A first end 10 of the elastic heating element 9 is attached to an inside surface of the reservoir 3 so that the elastic heating element 9 is attached and therefore anchored to a surface of the reservoir 3. In this example, the first end 10 of the elastic heating element 9 is attached to the surface that is, in use, the bottom inside surface of the reservoir 3. In other examples, the first end 10 of the elastic heating element 9 may be attached to another surface of the reservoir 1 so long as the surface is suitable for anchoring the elastic heating element 9 to the inside of the reservoir 3 with the first end 10 towards the bottom of the reservoir 3. A buoyant element 12 is attached to the second end 11 of the elastic heating element 9.

The buoyant element 12 is an element that is arranged to float on the surface of the volume of liquid 2 held in the reservoir. Therefore, the construction and shape of the buoyant element 12, and the material from which it is formed, is dependent on the physical properties of the liquid 2 held in the reservoir 3. The buoyant element 12 must have a weight that is less than the weight of the liquid 2 in the reservoir 3 that it displaces. This means that it will have an average density that is less than the average density of the liquid 2 and it will therefore float on the surface of the liquid 2. Also, the weight of the elastic heating element 9 tends to pull the buoyant element 12 down, and this may need to be taken into account when forming or selecting an appropriate buoyant element 12. The average density may further be chosen so as to take into account that the density of the liquid 2 may decrease as the liquid 2 is heated. In this example, the liquid 2 is water and the buoyant element 12 is therefore formed so that it floats on the surface of water. Specifically, given that the density of water at 100°C is 958.05 kg/m³, the buoyant element 12 in this example is formed so that it has an average density of less than about 950 kg/m³. The average density of the buoyant element 12 may be selected to be much less than 950 kg/m³ and may for example be less than around 100 kg/m³.

In this example, the buoyant element 12 has a spherical ball shape. In this example, the buoyant element 12 is hollow. In other examples, the buoyant element 12 may be solid. In this example, the buoyant element 12 is formed from low density polyethylene. In other examples, the buoyant element may be formed from another plastic or a metal, such as steel or aluminium. Conveniently, the buoyant element 12 may be formed from the same material as the apparatus 1.

The elastic heating element 9, which is submerged in the liquid 2 in the reservoir 3 in use, is therefore constructed and arranged to stretch and extend longitudinally in response to the liquid level inside the reservoir 3 being increased beyond a height corresponding to (at least generally) the length of the elastic heating element 9 when it is in its normal "rest" shape. The elastic heating element 9 is extended by a load being applied to it caused by the buoyancy force experienced by the buoyant element 12 as it rises to, or maintains itself at, the surface of the new higher level of liquid 2 in the reservoir 3. The elastic heating element 9 retracts towards and ultimately returns to its normal shape when the liquid level inside the reservoir 3 decreases.

The buoyant element 12 may have a size and/or shape that prevents the elastic heating element 9 contacting the inside of the side walls of the reservoir 3 in use, particularly when a user pours liquid 2 out of the reservoir 3 through the pouring opening 8. The buoyant element 12 may for example have portions or projections that extend laterally of the elastic heating element 9 or the buoyant element 12 may as a whole extend laterally of the elastic heating element 9, such that the buoyant element 12 rather than the elastic heating element 9 contacts the side walls of the reservoir 3 if the elastic heating element 9 bends or tips sideways in use.

The apparatus 1 also has a base 13. The base 13 provides for a connection 14 to a source of electricity, such as a mains electricity connection. The apparatus 1 also includes a switch (not shown) for activating and deactivating the electrical connection between the elastic heating element 9 and the mains electricity. The apparatus 1 also includes a thermostat (not shown) provided to automatically switch off the power to the elastic heating element 9 when it senses that a predetermined temperature has been reached.

An example of use of the apparatus 1 will now be described with reference to Figures 1 and 2.

In Figure 1, the reservoir 3 of the apparatus 1 is filled with a liquid 2 to a low liquid level relative to the total volume of the reservoir 3. The height of the liquid 2 in the reservoir 3 generally corresponds to the length of the elastic heating element 9 when it is in its normal "rest" shape. Therefore, the buoyancy force experienced by the buoyant element 12 floating on the surface of the liquid 2 exerts a negligible load on the elastic heating element 9. The elastic heating element 9 therefore does not extend longitudinally beyond its rest shape.

In Figure 2, the reservoir 3 of the apparatus 1 is filled with a liquid 2 to a high liquid level relative to the total volume of the reservoir 3. The height of the liquid 2 in the reservoir 3 is now greater than the length of the elastic heating element 9 when it is in its normal "rest" shape. Therefore, the buoyancy force experienced by the buoyant element 12 exerts a load on the anchored elastic heating element 9. This load forces the elastic heating element 9 to elastically stretch longitudinally so that its length extends to generally correspond to the new height of the liquid 2 in the reservoir 3.

If the level of the liquid 2 in the reservoir is subsequently reduced, the load exerted on the elastic heating element 9 due to the buoyancy force experienced by the buoyant element 12 floating on the surface of the liquid 2 decreases as the liquid level decreases. This allows the elastic heating element 9 to retract longitudinally towards its normal "rest" shape.

Accordingly, in the above arrangement, the length of the elastic heating element 9 can be forced to extend and retract in order to generally correspond to the height of the liquid level in the reservoir 3.

An advantage of this arrangement is that since the length of the elastic heating element 9 always corresponds (at least generally) to the height of the liquid level in the reservoir 3, the large volume of liquid that is present above the heating element in the reservoir of known apparatus is eliminated. The heat emitted by the elastic heating element 9 therefore does not have to conduct a long distance through the liquid 2 in the reservoir 3 in order to heat the whole volume of the liquid 2 and the reliance on convection for heating a large volume of liquid 2 is reduced. This results in quicker heat transfer through the liquid 2. The apparatus 1 described above therefore takes a shorter period of time to heat liquid 2 to a predetermined temperature than known apparatus and is more energy efficient as the heat losses will be lower given that the heating takes a shorter period of time.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. Apparatus for heating a liquid, the apparatus comprising:
an elastic heating element having a first end and a second end; and
a buoyant element,
wherein the first end of the elastic heating element is attached to an inside surface of the apparatus and the second end of the elastic heating element is attached to the buoyant element, whereby in use the elastic heating element can extend and retract according to the level of liquid within the apparatus.

2. Apparatus according to claim 1, wherein the elastic heating element has a helical shape.

3. Apparatus according to claim 1, wherein the elastic heating element has a concertina shape.

4. Apparatus according to any preceding claim, wherein the elastic heating element is formed from a Nichrome alloy or an iron-chromium-aluminium alloy.

5. Apparatus according to any preceding claim, wherein the elastic heating element is attached to the apparatus such that it is vertically oriented when the apparatus is in normal use and contains liquid.

6. Apparatus according to any preceding claim, wherein the buoyant element is formed from a plastic, steel or aluminium.

7. Apparatus according to any preceding claim, wherein the apparatus is a domestic kettle.

8. Apparatus according to any preceding claim, wherein the average density of the buoyant element is less than 950 kg/m³.
